# EUROPÄISCHE PATENTANMELDUNG

(11) **EP 4 108 071 A1**
(43) Veröffentlichungstag der Anmeldung: **28.12.2022**
(21) Anmeldenummer: 21181446.2
(22) Anmeldetag: 24.06.2021
(51) Int. Cl.: A01F 25/12, A01F 25/08, F26B 9/00

(54) **SYSTEM ZUM TROCKNEN VON PFLANZENFASERBALLEN**

(71) Anmelder: Zitzelsberger, Alois, 94089 Neureichenau (DE)
(72) Erfinder: Zitzelsberger, Alois, 94089 Neureichenau (DE)
(74) Vertreter: advotec.

(57) **Zusammenfassung**

System (1) zum Trocknen von Pflanzenfaserballen (2a, 2b), insbesondere Heuballen mit einem Gebläse und mindestens einer Luftführungsleitung (3) zur Zuleitung von Luft (4) aus dem Gebläse zu mindestens zwei zu trocknenden Pflanzenfaserballen (2a, 2b), wobei die mindestens eine Luftführungsleitung (3) mit einer Luftverteilervorrichtung (7, 7') in offener Verbindung steht, wobei die Luftverteilervorrichtung (7, 7') einen mit der Luftführungsleitung (3) verbundenen Mittelabschnitt (8) mit rundem oder rechteckigem Querschnitt sowie zwei aus dem Mittelabschnitt (8) entspringende sich gegenüberliegend angeordnete Aufnahmeabschnitte (9a, 9b) mit rundem oder rechteckigem Querschnitt zur teilweisen Aufnahme von jeweils einem Pflanzenfaserballen (2a, 2b) aufweist, wobei sich die Aufnahmeabschnitte (9a, 9b) vom Mittelabschnitt (8) aus trichterförmig erweitern.

## Beschreibung

Die vorliegende Erfindung betrifft ein System zum Trocknen von Pflanzenfaserballen, insbesondere Heuballen.

Meist ist Erntegut, das zu Ballen gewickelt wird, noch nicht in einem ausreichenden Maße getrocknet, sodass sich in den Ballen, sofern die Restfeuchte nicht rechtzeitig abgeführt wird, Schimmel bildet. In derartigen Fällen ist insbesondere Heu zum Verfüttern nicht mehr verwendbar und muss vernichtet werden. Des Weiteren kann es durch Restfeuchtigkeit im Inneren eines solchen Ballens zu Fermentationsprozessen und hoher Wärmeentwicklung kommen. Dies kann sogar zu einem Entflammen eines solchen Ballens führen.

Aus dem Stand der Technik sind zur Trocknung von Heuballen u. a. sogenannte Trockenböden bekannt. Hierbei handelt es sich um luftdurchlässige Böden, welche meist aus Beton oder Stahlblechen mit Perforierungen aufgebaut sind. Diese Art der Trocknung ist jedoch nur für loses Pflanzenmaterial oder quaderförmige Ballen (sogenannte Quaderballen) geeignet. Nachteil bei der Trocknung von Quaderballen ist der fehlende seitliche Abschluss. Dadurch strömt die Luft seitlich am Ballen vorbei, sodass im Inneren des Ballens kein ausreichendes Trocknen möglich ist.

Zum Trocknen von Rundballen ist es aus dem Stand der Technik bekannt, diese Rundballen auf Öffnungen von Schächten aufzusetzen und von unten mit Luft zu beaufschlagen. Der Nachteil dieses Verfahrens besteht insbesondere in der ungleichmäßigen Trocknung der Ballen in den Randbereichen, die meist noch feucht sind, obwohl das Innere der Ballen bereits zu krümeln beginnt. Grund hierfür ist, dass der Bereich der Rundballen außerhalb der Belüftungsöffnungen nur unzureichend mit Frischluft versorgt wird. Erschwerend kommt hinzu, dass bei Rundballen der Randbereich eine höhere Pressdichte aufweist als der Kern. Dies erschwert zusätzlich eine gleichmäßige Trocknung der Ballen in den Randbereichen.

Schließlich ist es bekannt, Rundballen oder Quaderballen durch Unterdruck zu trocknen. Hierbei müssen die Ballen seitlich mit luftundurchlässiger Kunststofffolie versehen werden, um einen Unterdruck zu erzeugen. Dies ist mit hohem Aufwand verbunden. Zudem fallen bei diesem Verfahren große Mengen an Plastikmüll in Form von Kunststofffolien an.

Der vorliegenden Erfindung liegt die Aufgabe zugrunde, die oben geschilderten Nachteile der bekannten Systeme zum Trocknen von Pflanzenfaserballen zu überwinden.

Diese Aufgabe wird erfindungsgemäß durch ein System zum Trocknen von Pflanzenfaserballen, insbesondere Heuballen mit einem Gebläse und mindestens einer Luftführungsleitung zur Zuleitung von Luft aus dem Gebläse zu mindestens zwei zu trocknenden Pflanzenfaserballen gelöst, wobei die mindestens eine Luftführungsleitung mit einer Luftverteilervorrichtung in offener Verbindung steht, wobei die Luftverteilervorrichtung einen mit der Luftführungsleitung verbundenen Mittelabschnitt mit rundem oder rechteckigem Querschnitt sowie zwei aus dem Mittelabschnitt entspringende, sich gegenüberliegend angeordnete Aufnahmeabschnitte mit rundem oder rechteckigem Querschnitt zur teilweisen Aufnahme von jeweils einem Pflanzenfaserballen aufweist, wobei sich die Aufnahmeabschnitte vom Mittelabschnitt aus trichterartig erweitern. Durch die spezielle Form der mindestens einen Luftverteilervorrichtung, welche mit der Form einer Sanduhr vergleichbar ist, ist es möglich, die zu trocknenden Ballen an einem ihrer Enden in die Luftverteilervorrichtung einzuführen, sodass diese die zu trocknenden Ballen ringsum umschließt. Wird dann Luft aus dem Gebläse und der Luftführungsleitung in die Luftverteilervorrichtung geblasen, durchströmt diese die zu trocknenden Ballen komplett, sodass die zu trocknende Ballen in Gänze mit Luft durchflutet werden. So strömt Luft nicht nur durch den Kernbereich eines Ballens, sondern auch durch die Randbereiche.

Soll ein Rundballen getrocknet werden, weist die Luftverteilervorrichtung einen runden Querschnitt auf. Soll dagegen ein quaderförmiger Ballen getrocknet werden, so weist die Luftverteilervorrichtung einen rechteckigen Querschnitt auf. Durch die Tatsache, dass die Luftverteilervorrichtung zwei sich gegenüberliegend angeordnete Aufnahmeabschnitte aufweist, ist es möglich, zwei zu trocknende Pflanzenfaserballen übereinander anzuordnen. Hierbei wird die Luftverteilervorrichtung zunächst auf einen auf einem Untergrund stehenden Ballen mit einem ersten Aufnahmeabschnitt aufgesetzt. Anschließend wird ein zweiter Ballen auf den darüber angeordneten zweiten Aufnahmeabschnitt gelegt. Durch das Eigengewicht des zweiten Ballens rutscht dieser in den zweiten Aufnahmeabschnitt. Durch das Gewicht des zweiten Ballens wird auch der erste Aufnahmeabschnitt fest auf den darunter angeordneten Ballen gedrückt, sodass auch dieser tiefer in den ersten Aufnahmeabschnitt eindringt. Dadurch sind beide Ballen fest in der Luftverteilervorrichtung integriert, wobei die jeweiligen Aufnahmeabschnitte die zu trocknenden Ballen um ihren kompletten Querschnitt fest umschließen. Dadurch wird die Luft aus der Luftführungsleitung vollständig durch die übereinander angeordneten Ballen geblasen.

Durch die Tatsache, dass die Luft zum Trocknen der Ballen durch die Ballen hindurch geblasen und nicht gesogen wird, sind auch keinerlei luftdichte Materialien, wie beispielsweise Kunststofffolien von Nöten, um einen Unterdruck zu erzeugen. Damit das erfindungsgemäße System optimal laufen kann, ist es bevorzugt, dass der Innenumfang der Aufnahmeabschnitte der Luftverteilervorrichtung im Bereich ihrer freien Enden größer ist als der Außenumfang der zu trocknenden Pflanzenfaserballen. Auf diese Art und Weise können die Pflanzenfaserballen optimal in die Aufnahmeabschnitte der Luftverteilervorrichtung integriert werden.

In der Regel ist im Mittelabschnitt der Luftverteilervorrichtung eine Aussparung zum Einführen eines Ausblasendes der Luftführungsleitung vorgesehen. Bei einer bevorzugten Ausführungsform des erfindungsgemäßen Systems ist der Mittelabschnitt der Luftverteilervorrichtung als kreisrunder, beidseitig offener Ring ausgebildet, aus welchem die sich konisch erweiternden Aufnahmeabschnitte entspringen. Mit Hilfe dieser sich konisch erweiternden Endabschnitte ist es in idealer Weise möglich, zwei übereinander angeordnete Rundballen einfach und fest in die Aufnahmeabschnitte einer Luftverteilervorrichtung einzubringen und anschließend mit Luft zu durchströmen.

Bei einer weiteren Ausführungsform des erfindungsgemäßen Systems ist der Mittelabschnitt der Luftverteilervorrichtung als quaderförmiger, beidseitig offener Quader ausgebildet, aus welchem die sich pyramidenstumpfartig erweiternden Aufnahmeabschnitte entspringen. Durch derartig sich erweiternde Aufnahmeabschnitte ist es in idealer Weise möglich, zwei übereinander angeordnete Quaderballen mittels der sich zwischen den beiden Quaderballen befindenden Luftverteilervorrichtung komplett mit Luft zu durchfluten.

Mit Vorteil sind im Mittelabschnitt der Luftverteilervorrichtung Abstützelemente, insbesondere Abstützstäbe zum Abstützen der zu trocknenden Pflanzenfaserballen angeordnet. Dadurch wird vermieden, dass die zu trocknenden Ballen zu weit in die Luftverteilervorrichtung gelangen und möglicherweise die bereits oben erwähnte Aussparung im Mittelabschnitt blockieren. Dies würde einen ungehinderten Luftstrom in die Luftverteilervorrichtung behindern.

Vorzugsweise umfasst die Luftführungsleitung eine mit dem Gebläse verbundene Hauptleitung sowie mehrere aus der Hauptleitung entspringende Zuführleitungen zur Kopplung mit mehreren Luftverteilervorrichtungen. Auf diese Art und Weise kann eine Vielzahl von Pflanzenfaserballen mit dem erfindungsgemäßen System getrocknet werden.

Eine bevorzugte Variante des erfindungsgemäßen Systems ist durch eine Heizeinrichtung zur Erwärmung der in die mindestens eine Luftverteilervorrichtung geleitete Luft gekennzeichnet. Wird erwärmte Luft durch die zu trocknenden Ballen geleitet, erhöht dies die Effizienz der Trocknung.

Die vorliegende Erfindung betrifft ferner ein Verfahren zum Trocknen von Pflanzenfaserballen, insbesondere Heuballen mit einem erfindungsgemäßen System, umfassend folgende Arbeitsschritte:
a) Aufstellen eines ersten zu trocknenden zylinderförmigen oder quaderförmigen Pflanzenfaserballens auf einem Untergrund, wobei ein zylinderförmiger Pflanzenfaserballen (Rundballen) mit einer seiner beiden ebenen Grundflächen auf den Untergrund gestellt wird;
b) Aufsetzen einer der Form des zu trocknenden Pflanzenfaserballens entsprechenden Luftverteilervorrichtung auf den ersten Pflanzenfaserballen, sodass dessen oberer Rand im Wesentlichen vollständig an einer Innenfläche eines ersten Aufnahmeabschnittes der Luftverteilervorrichtung anliegt;
c) Einlegen eines zweiten zu trocknenden, der Form der Luftverteilervorrichtung entsprechenden Pflanzenfaserballens in den über dem ersten Aufnahmeabschnitt angeordneten zweiten Aufnahmeabschnitt der Luftverteilervorrichtung, sodass dessen unterer Rand im Wesentlichen vollständig an einer Innenfläche des zweiten Aufnahmeabschnittes der Luftverteilervorrichtung anliegt;
d) Anschließen der Luftverteilervorrichtung an die Luftführungsleitung;
e) Aktivieren des Gebläses zum Belüften der zu trocknenden Pflanzenfaserballen.

Mit dem erfindungsgemäßen Verfahren ist es auf ideale Weise möglich, mindestens zwei Pflanzenfaserballen durch Einblasen von Luft in die Pflanzenfaserballen zu trocknen. Durch das übereinander Anordnen zweier zu trocknender Pflanzenfaserballen wird der besonders vorteilhafte Effekt erreicht, dass die beiden Pflanzenfaserballen durch ihr Eigengewicht in die beiden, ebenfalls übereinander angeordneten Aufnahmeabschnitte der Luftverteilervorrichtung hineingedrückt werden, sodass sie fest an einer Innenfläche der Aufnahmeabschnitte der Luftverteilervorrichtung anliegen können. Dadurch wird vermieden, dass Trocknungsluft an den Außenseiten der Pflanzenfaserballen vorbeiströmt. Vielmehr wird sichergestellt, dass die Luft gleichmäßig durch einen gesamten zu trocknenden Ballen geleitet wird. Somit werden sowohl Zentralbereiche als auch die Randbereiche der zu trocknenden Ballen gleichmäßig mit Luft durchflutet.

Mit Vorteil wird der erste Pflanzenfaserballen auf einen mindestens teilweise luftdurchlässigen Untergrund, wie z. B. auf einen Rost, Standfüße, ein Gestell oder dergleichen gestellt. Dadurch wird erreicht, dass die Luft, welche durch den ersten Pflanzenfaserballen geströmt ist und Feuchtigkeit aus dem Pflanzenfaserballen aufgenommen hat, am unteren Ende des Pflanzenfaserballens aus diesem ungehindert ausströmen kann.

Vorzugsweise sind die zu trocknenden Pflanzenfaserballen frei von luftundurchlässigem Folienmaterial, wie beispielsweise Kunststofffolien. Dadurch wird Plastikmüll vermieden.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: ein erfindungsgemäßes System zum Trocknen von Rundballen;
- Fig. 2:: eine Luftverteilervorrichtung des Systems gemäß Fig.1 zum Teil im Längsschnitt;
- Fig. 3:: eine Draufsicht auf die Luftverteilervorrichtung gemäß Fig. 2;
- Fig. 4:: eine Draufsicht auf eine zweite Variante einer Luftverteilervorrichtung für ein System zum Trocknen von Quaderballen;
- Fig. 5:: die Luftverteilervorrichtung gemäß Fig. 4 teilweise im Längsschnitt.

Nachfolgend werden gleiche oder funktionsgleiche Elemente mit den gleichen Bezugsziffern gekennzeichnet.

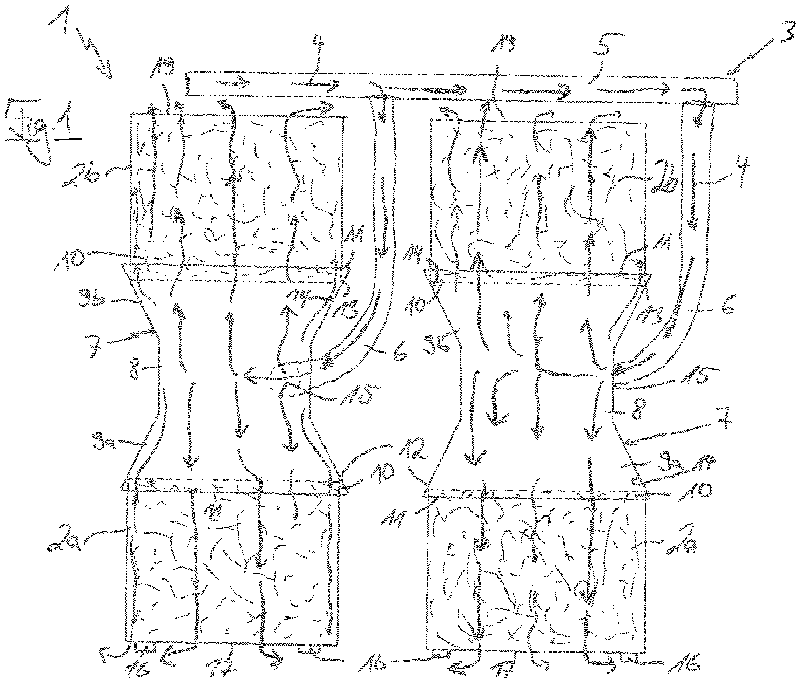

Figur 1 zeigt eine schematische Darstellung eines erfindungsgemäßen Systems 1 zum Trocknen von Pflanzenfaserballen in Form von Rundballen 2a, 2b. Bei den Rundballen 2a, 2b handelt es sich um Heuballen. Das System 1 umfasst ein hier nicht dargestelltes Gebläse sowie eine Luftführungsleitung 3 zur Zuleitung von erwärmter Luft 4 aus dem Gebläse zu den zu trocknenden Rundballen 2a, 2b. Die vom Gebläse ausströmende Luft 4 ist mittels Pfeilen dargestellt, welche die Strömungsrichtung der Luft 4 zeigen. Die Luftführungsleitung 3 umfasst eine mit dem Gebläse verbundene Hauptleitung 5 sowie einer Mehrzahl von aus der Hauptleitung 5 abzweigende Zuführleitungen 6. Das System 1 umfasst ferner eine Mehrzahl von Luftverteilervorrichtungen 7, welche jeweils mit einer Zuführleitung 6 in offener Verbindung stehen.

Jede Luftverteilervorrichtung 7 umfasst einen Mittelabschnitt 8 mit rundem Querschnitt. Der Mittelabschnitt 8 ist also zylinderförmig ausgebildet. Jede Luftverteilervorrichtung 7 umfasst ferner zwei aus dem Mittelabschnitt 8 entspringende, sich gegenüberliegend angeordnete Aufnahmeabschnitte 9a, 9b, wobei die Aufnahmeabschnitte 9a, 9b ebenfalls einen runden Querschnitt aufweisen. Die Aufnahmeabschnitte 9a, 9b erweitern sich vom jeweiligen Mittelabschnitt 8 aus trichterartig. Die Aufnahmeabschnitte 9a, 9b sind also konisch ausgebildet und weisen die Form eines Kegelstumpfes auf. Die Luftverteilervorrichtungen 7 sind so angeordnet, dass ihre Längsachsen vertikal angeordnet sind. Dadurch sind ihre Aufnahmeabschnitte 9a, 9b übereinander angeordnet. Sowohl die unteren Aufnahmeabschnitte 9a als auch die oberen Aufnahmeabschnitte 9b der Luftverteilervorrichtungen 7 nehmen jeweils einen Anfangsabschnitt 10 eines Rundballens 2a, 2b auf. Der Innenumfang der Aufnahmeabschnitte 9a, 9b der Luftverteilervorrichtungen 7 ist im Bereich ihrer freien Enden 11 größer als der Außenumfang der zu trocknenden Rundballen 2a, 2b. Erst einige Zentimeter tiefer in den Aufnahmeabschnitten 9a, 9b ist der Innenumfang dieser Abschnitte geringer als der Außenumfang der Rundballen 2a, 2b. Auf diese Art und Weise lassen sich die Rundballen 2a, 2b zwar mit ihren Anfangsabschnitten 10 in die Aufnahmeabschnitte 9a, 9b einführen, liegen jedoch mit ihrem oberen Rand 12 bzw. unteren Rand 13 vollständig an der jeweiligen Innenfläche 14 der Aufnahmeabschnitte 9a und 9b an. Dadurch schließen die Rundballen 2a, 2b die Aufnahmeabschnitte 9a, 9b nach außen quasi ab, sodass Trocknungsluft 4 nicht aus den Aufnahmeabschnitten 9a, 9b entweichen kann, ohne durch die zu trocknenden Ballen 2a, 2b zu strömen.

Die Mittelabschnitte 8 der Luftverteilervorrichtungen 7 weisen jeweils eine Aussparung 15 zum Einführen einer Zuführleitung 6 der Luftführungsleitung 3 auf. Die Mittelabschnitte 8 sind als kreisrunde, beidseitig offene Ringe ausgebildet, aus welchen die sich konisch erweiternden Aufnahmeabschnitte 9a, 9b entspringen.

Das System 1 umfasst ferner eine hier nicht dargestellte Heizeinrichtung zur Erwärmung der Trocknungsluft 4. Das System 1 weist in der vorliegenden Ausführungsform insgesamt fünf Luftverteilervorrichtungen 7 und damit auch fünf Zuführleitungen 6 auf, wobei in Figur 1 nur zwei dieser Luftverteilervorrichtungen gezeigt sind.

Zur Durchführung des erfindungsgemäßen Verfahrens mit Hilfe des erfindungsgemäßen Systems 1 wird nun wie folgt vorgegangen:
Zunächst werden zu trocknende Rundballen 2a nebeneinander auf einen Untergrund in Form von Holzbalken 16 gestellt. Dabei werden die Rundballen 2a jeweils mit einer ebenen Grundfläche 17 auf die Holzbalken 16 gestellt. Anschließend werden auf die nebeneinander angeordneten Ballen 2a die Luftverteilervorrichtungen 7 aufgesetzt, sodass deren oberer Rand 12 vollständig an den Innenflächen 14 der unteren Aufnahmeabschnitte 9a anliegen. Anschließend wird in die oberen Aufnahmeabschnitte 9b der Luftverteilervorrichtungen 7 jeweils ein weiterer Ballen 2b eingelegt, sodass jeweils zwei zu trocknende Ballen 2a, 2b übereinander angeordnet sind. Der untere Rand 13 der in den Aufnahmeabschnitten 9b angeordneten Ballen 2b liegen ringsum ebenfalls an den Innenflächen 14 der Aufnahmeabschnitte 9b an.

Die oberen Ballen 2b werden durch ihr Eigengewicht in die Aufnahmeabschnitte 9b gedrückt und drücken ihrerseits die Aufnahmeabschnitte 9a auf die darunter angeordneten Ballen 2a. Auf diese Art und Weise wird ein fester Sitz sowohl der oberen Ballen 2b als auch der unteren Ballen 2a in den Aufnahmeabschnitten 9a, 9b gewährleistet.

Anschließend werden die Zuführleitungen 6 an die Luftverteilervorrichtungen 7 angeschlossen, indem ihre freien Enden in die Aussparungen 15 in den Mittelabschnitten 8 eingeführt werden. Schließlich wird das hier nicht dargestellte Gebläse sowie die Lufterwärmungsvorrichtung aktiviert, sodass erwärmte Luft vom Gebläse in die Hauptleitung 5 geblasen wird. Von der Hauptleitung 5 aus wird die Luft 4 in die Zuführleitungen 6 und von dort aus zunächst in die Mittelabschnitte 8 der Luftverteilervorrichtungen 7 geleitet. Von den Mittelabschnitten 8 aus strömt die Luft 4 in die Aufnahmeabschnitte 9a, 9b und durchströmt dann die Ballen 2a, 2b. Dabei strömt die Luft 4 durch alle Bereiche der Ballen 2a, 2b im Wesentlichen gleichmäßig. Dadurch werden sowohl die Zentralbereiche als auch die Randabschnitte der Ballen 2a, 2b gleichzeitig mit Luft 4 durchflutet, welche an den offenen Enden der Ballen 2a, 2b wieder ins Freie strömt. Durch die Tatsache, dass die unteren Ballen 2a auf Holzbalken 16 stehen, kann die Luft 4 in diesem Bereich ungehindert aus den Ballen 2a ausströmen und die mitgenommene Feuchtigkeit aus den Ballen entfernen. Zudem strömt die Luft 4 aus den oberen Enden 19 der Ballen 2b aus.

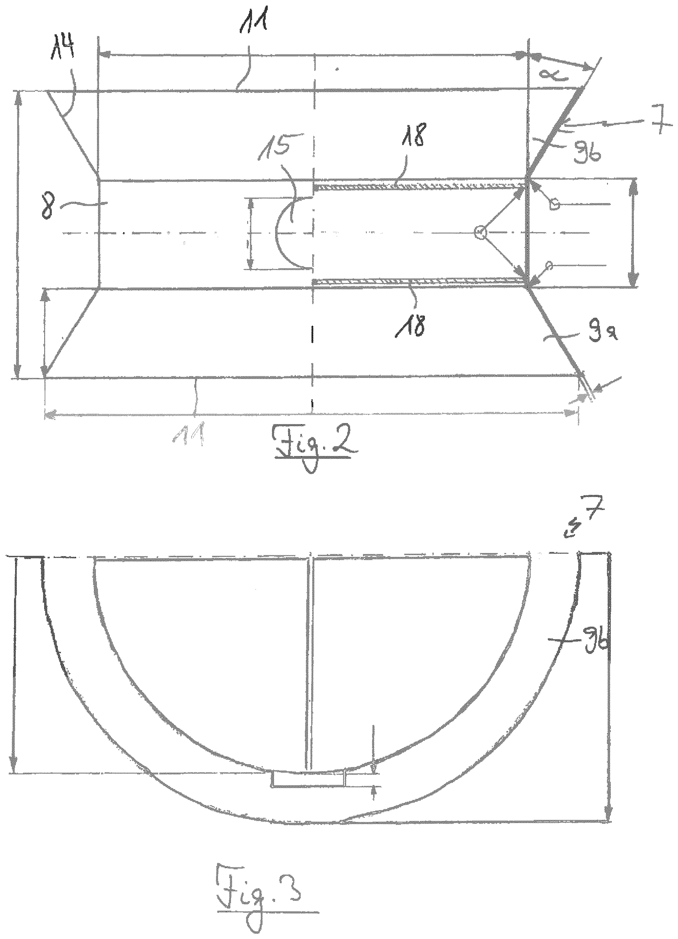

Figur 2 zeigt eine Luftverteilervorrichtung 7 teilweise im Längsschnitt. Der Winkel α zwischen dem Mittelabschnitt 8 und den Aufnahmeabschnitten 9a, 9b beträgt im vorliegenden Ausführungsbeispiel 29°. Im Mittelabschnitt 8 sind Abstützstäbe 18 zur Abstützung von zu trocknenden Rundballen vorgesehen, welche verhindern, dass die zu trocknenden Ballen 2a, 2b in den Mittelabschnitt 8 gelangen und die Aussparung 15 blockieren.

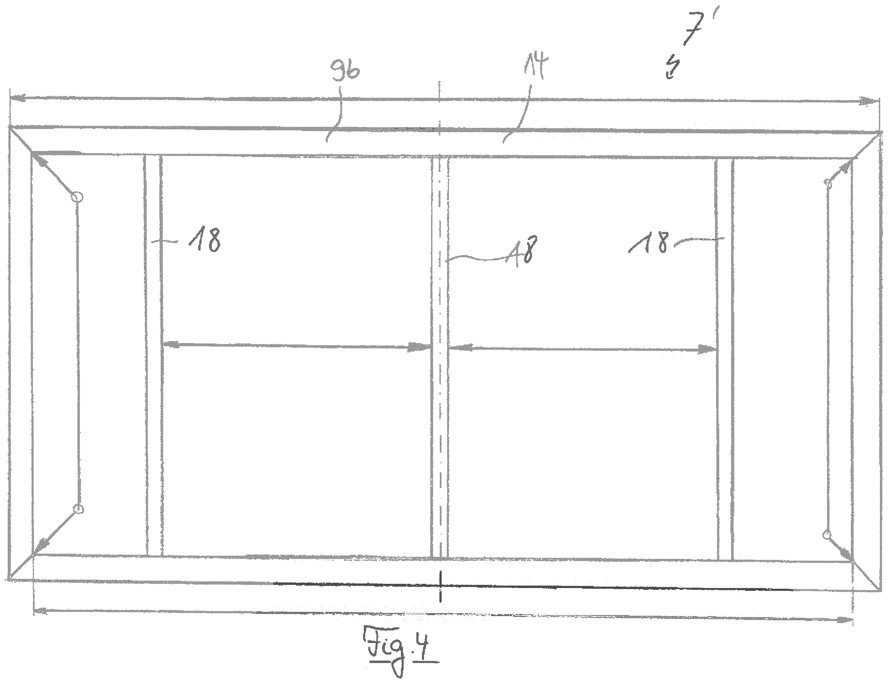

Figur 4 zeigt eine Draufsicht auf eine weitere Ausführungsform einer Luftverteilervorrichtung 7' zum Trocknen von Quaderballen. Der Mittelabschnitt 8 der Luftverteilervorrichtung 7' ist als quaderförmiger, beidseitig offener Quader ausgebildet, aus welchem die sich pyramidenstumpfartig erweiternden Aufnahmeabschnitte 9a, 9b entspringen. Auch hier weist der Mittelabschnitt 8 Abstützstäbe 18 auf.

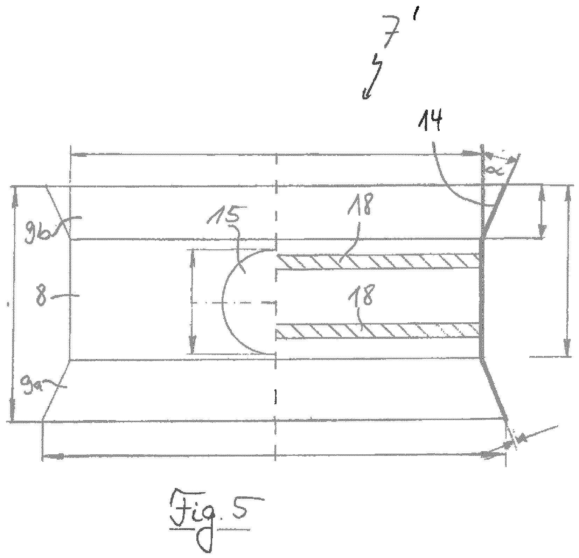

Figur 5 zeigt die Luftverteilervorrichtung 7' teilweise im Längsschnitt.

## Patentansprüche

1. System (1) zum Trocknen von Pflanzenfaserballen (2a, 2b), insbesondere Heuballen mit einem Gebläse und mindestens einer Luftführungsleitung (3) zur Zuleitung von Luft (4) aus dem Gebläse zu mindestens zwei zu trocknenden Pflanzenfaserballen (2a, 2b), wobei die mindestens eine Luftführungsleitung (3) mit einer Luftverteilervorrichtung (7, 7') in offener Verbindung steht, wobei die Luftverteilervorrichtung (7, 7') einen mit der Luftführungsleitung (3) verbundenen Mittelabschnitt (8) mit rundem oder rechteckigem Querschnitt sowie zwei aus dem Mittelabschnitt (8) entspringende sich gegenüberliegend angeordnete Aufnahmeabschnitte (9a, 9b) mit rundem oder rechteckigem Querschnitt zur teilweisen Aufnahme von jeweils einem Pflanzenfaserballen (2a, 2b) aufweist, wobei sich die Aufnahmeabschnitte (9a, 9b) vom Mittelabschnitt (8) aus trichterförmig erweitern.

2. System nach Anspruch 1, **dadurch gekennzeichnet, dass** der Innenumfang der Aufnahmeabschnitte (9a, 9b) der Luftverteilervorrichtung (7, 7') im Bereich ihrer freien Enden (11) größer ist als der Außenumfang der zu trocknenden Pflanzenfaserballen (2a, 2b).

3. System nach einem der Ansprüche 1 oder 2, **dadurch gekennzeichnet, dass** im Mittelabschnitt (8) der Luftverteilervorrichtung (7, 7') eine Aussparung (15) zum Einführen eines Ausblasendes der Luftführungsleitung (3) vorgesehen ist.

4. System nach einem der vorhergehenden Ansprüche, **dadurch gekennzeichnet, dass** der Mittelabschnitt (8) der Luftverteilervorrichtung (7) als kreisrunder, beidseitig offener Ring ausgebildet ist, aus welchem die sich konisch erweiternden Aufnahmeabschnitte (9a, 9b) entspringen.

5. System nach einem der Ansprüche 1 bis 3, **dadurch gekennzeichnet, dass** der Mittelabschnitt (8) der Luftverteilervorrichtung (7') als quaderförmiger, beidseitig offener Quader ausgebildet ist, aus welchem die sich pyramidenstumpfartig erweiternden Aufnahmeabschnitte (9a, 9b) entspringen.

6. System nach einem der vorhergehenden Ansprüche, **dadurch gekennzeichnet, dass** im Mittelabschnitt (8) der Luftverteilervorrichtung (7, 7') Abstützelemente, insbesondere Abstützstäbe (18) zum Abstützen der zu trocknenden Pflanzenfaserballen (2a, 2b) angeordnet sind.

7. System nach einem der vorhergehenden Ansprüche, **dadurch gekennzeichnet, dass** die Luftführungsleitung (3) eine mit dem Gebläse verbundene Hauptleitung (5) sowie mehrere aus der Hauptleitung (5) entspringende Zuführleitungen (6) zur Kopplung mit mehreren Luftverteilervorrichtungen (7, 7') umfasst.

8. System nach einem der vorhergehenden Ansprüche, **gekennzeichnet durch** eine Heizeinrichtung zur Erwärmung der in die mindestens eine Luftverteilervorrichtung (7, 7') geleitete Luft (4).

9. Verfahren zum Trocknen von Pflanzenfaserballen (2a, 2b), insbesondere Heuballen mit einem System (1) nach einem der Ansprüche 1 bis 8, umfassend folgende Arbeitsschritte:
a) Aufstellen eines ersten zu trocknenden zylinderförmigen oder quaderförmigen Pflanzenfaserballens (2a) auf einem Untergrund (16), wobei ein zylinderförmiger Pflanzenfaserballen (2a) mit einer seiner beiden ebenen Grundflächen (17) auf den Untergrund (16) gestellt wird;
b) Aufsetzen einer der Form des zu trocknenden Pflanzenfaserballens (2a) entsprechenden Luftverteilervorrichtung (7, 7') auf den ersten Pflanzenfaserballen (2a), sodass dessen oberer Rand (12) im Wesentlichen vollständig an einer Innenfläche (14) eines ersten Aufnahmeabschnittes (9a) der Luftverteilervorrichtung (7, 7') anliegt;
c) Einlegen eines zweiten zu trocknenden, der Form der Luftverteilervorrichtung (7, 7') entsprechenden Pflanzenfaserballens (2b) in den über dem ersten Aufnahmeabschnitt (9a) angeordneten zweiten Aufnahmeabschnitt (9b) der Luftverteilervorrichtung (7, 7'), sodass dessen unterer Rand (13) im Wesentlichen vollständig an einer Innenfläche (14) des zweiten Aufnahmeabschnittes (9b) der Luftverteilervorrichtung (7, 7') anliegt;
d) Anschließen der Luftverteilervorrichtung (7, 7') an die Luftführungsleitung (3);
e) Aktivieren des Gebläses zum Belüften der zu trocknenden Pflanzenfaserballen (2a, 2b).

10. Verfahren nach Anspruch 9, **dadurch gekennzeichnet, dass** der erste Pflanzenfaserballen (2a) auf einem mindestens teilweise luftdurchlässigen Untergrund, wie z. B. auf einen Rost, Standfüße (16), ein Gestell oder dergleichen gestellt wird.

11. Verfahren nach einem der Ansprüche 9 oder 10, **dadurch gekennzeichnet, dass** die zu trocknenden Pflanzenfaserballen (2a, 2b) frei von luftundurchlässigem Folienmaterial, wie z. B. Kunststofffolie sind.
